# FASCICULE DE BREVET EUROPEEN

(11) **EP 2 350 601 B1**
(45) Date de publication et mention de la délivrance du brevet: **09.01.2019**
(21) Numéro de dépôt: 09795492.9
(22) Date de dépôt: 23.11.2009
(51) Int. Cl.: G01M 3/32, G01M 3/34

(54) **PROCÉDÉ D'ÉVALUATION DE L'ÉTANCHÉITÉ D'UNE ENCEINTE D'UN SERVOMOTEUR**
VERFAHREN ZUR ÜBERPRÜFUNG DER DICHTUNG EINES SERVOMOTORGEHÄUSES
METHOD FOR ASSESSING THE SEAL OF A SERVOMOTOR HOUSING

(30) Priorité: 28.11.2008 FR 0858105
(43) Date de publication de la demande: 03.08.2011
(73) Titulaire: Bernard Controls, 95500 Gonesse (FR)
(72) Inventeur: BERNARD, Etienne, F-75016 Paris (FR); AUBERT MAGUERO, Gilles, F-75012 Paris (FR)
(74) Mandataire: Thinat, Michel
(86) Numéro de dépôt international: PCT/FR2009/052256
(87) Numéro de publication internationale: WO 2010/061109

(56) Documents cités:
- FR-A- 1 315 389
- FR-A1- 2 761 471
- FR-A1- 2 849 193
- US-A- 3 031 884

## Description

La présente invention a pour objet un procédé d'évaluation de l'étanchéité d'une enceinte d'un servomoteur. Elle a également pour objet un dispositif permettant de mettre en oeuvre le procédé.

Un servomoteur est conçu pour générer un mouvement précis d'un élément mécanique, par exemple une vanne industrielle, selon une commande externe. Un servomoteur est ainsi un système motorisé capable d'atteindre des positions prédéterminées, puis de les maintenir. La position est, dans le cas d'un servomoteur rotatif, une position d'angle, et, dans le cas d'un servomoteur linéaire, une position de distance. Le démarrage et la conservation de la position prédéterminée sont commandés par la commande externe.

Un paramètre important pour le bon fonctionnement du servomoteur est son étanchéité. En effet, dans certains environnements sous pression de fluide, comme par exemple dans les centrales nucléaires, les servomoteurs doivent pouvoir résister à des pressions de vapeur d'eau élevées, allant par exemple jusqu'à 5 ou 6 bars.

Le servomoteur, bien que réputé étanche, peut présenter des défauts d'étanchéité dus par exemple à un joint défectueux ou à un câble électrique mal ajusté dans une entrée de câble du servomoteur. Si le servomoteur n'est pas parfaitement étanche, de la vapeur d'eau sous pression risque de pénétrer à l'intérieur du servomoteur et d'endommager l'équipement électrique du servomoteur.

Il est connu de changer régulièrement les joints du servomoteur pour pallier ces problèmes d'étanchéité. Toutefois, les joints peuvent être mal montés. Il est également possible que le défaut d'étanchéité ne soit pas lié au joint, mais par exemple à une fissuration de l'enceinte du servomoteur. Le changement des joints ne permet donc pas de s'assurer dans tous les cas que le servomoteur est étanche.

Il apparaît ainsi nécessaire de pouvoir évaluer de manière simple et fiable l'étanchéité d'une enceinte du servomoteur.

L'invention propose un procédé permettant d'atteindre cet objectif. Des procédés et dispositifs d'évaluation de l'étanchéité d'une enceinte de l'art antérieur sont divulgués dans les documents FR2849193, FR1315389, US3031884 et FR2761471.

L'invention a ainsi pour objet un procédé d'évaluation de l'étanchéité d'une enceinte d'un servomoteur, le servomoteur comprenant un ensemble moteur apte à générer un mouvement d'un élément mécanique, un ensemble de détection de position de l'élément mécanique relié de façon amovible à un connecteur, ainsi qu'un ensemble mécanique relié de façon amovible à un connecteur et comprenant l'élément mécanique et un système de commande manuelle, l'ensemble mécanique comprenant également un espace de communication entre l'enceinte, le connecteur et l'ensemble moteur, l'espace de communication étant isolé et étanche vis-à-vis de l'élément mécanique, le procédé étant mis en oeuvre en configuration opérationnelle du servomoteur, les connecteurs munis de leurs câbles respectifs étant installés, de manière à tester l'étanchéité de l'ensemble moteur, de l'ensemble de détection de position et des connecteurs.

Le procédé selon l'invention comprend les étapes suivantes :
- une étape de diminution de la pression à l'intérieur de ladite enceinte, à partir d'une pression initiale, et jusqu'à une pression de consigne, par la mise en oeuvre d'un moyen d'aspiration de fluide raccordé au servomoteur à l'aide d'une ouverture de l'enceinte, l'ouverture étant apte à être fermée par un bouchon,
- lorsque la pression à l'intérieur de ladite enceinte est égale à la pression de consigne, une étape de détermination de l'évolution de la pression à l'intérieur de ladite enceinte en fonction du temps, pendant un intervalle de temps prédéterminé, le moyen d'aspiration de fluide n'étant plus mis en oeuvre pendant cette étape, ledit moyen d'aspiration de fluide étant en outre relié à ladite enceinte de manière à empêcher, entre le moyen d'aspiration de fluide et l'enceinte, tout passage de fluide en sens inverse du sens d'aspiration de fluide, et
- une étape d'évaluation de l'étanchéité de l'enceinte du servomoteur en fonction de l'évolution de pression déterminée.

L'enceinte du servomoteur peut être considérée comme étanche si, pendant l'évolution de pression déterminée, la différence entre la pression à l'intérieur de l'enceinte du servomoteur et la pression de consigne est inférieure à une valeur prédéterminée.

La pression initiale à l'intérieur de l'enceinte du servomoteur est avantageusement de 1 bar.

La différence entre la pression initiale à l'intérieur de l'enceinte du servomoteur et la pression de consigne est de préférence comprise entre 0,7 et 0,9 bar, et encore plus préférentiellement entre 0,75 et 0,85 bar.

La durée de l'intervalle de temps prédéterminé de l'étape de détermination de l'évolution de pression est de préférence comprise entre 10 et 20 minutes.

Le procédé peut être mis en oeuvre dans une centrale nucléaire.

L'invention a également pour objet un dispositif d'évaluation de l'étanchéité d'une enceinte d'un servomoteur.

Le dispositif selon l'invention comprend :
- un servomoteur comprenant un ensemble moteur apte à générer un mouvement d'un élément mécanique, un ensemble de détection de position de l'élément mécanique relié de façon amovible à un connecteur, ainsi qu'un ensemble mécanique relié de façon amovible à un connecteur et comprenant l'élément mécanique et un système de commande manuelle, l'ensemble mécanique comprenant également un espace de communication entre l'enceinte, le connecteur et l'ensemble moteur, l'espace de communication étant isolé et étanche vis-à-vis de l'élément mécanique, les connecteurs munis de leurs câbles respectifs étant installés, de manière à tester l'étanchéité de l'ensemble moteur, de l'ensemble de détection de position et des connecteurs,
- un moyen d'aspiration de fluide raccordé au servomoteur à l'aide d'une ouverture de l'enceinte, l'ouverture étant apte à être fermée par un bouchon,
- un moyen permettant d'empêcher, entre le moyen d'aspiration de fluide et l'enceinte, tout passage de fluide en sens inverse du sens d'aspiration de fluide, et
- un moyen de mesure de la pression à l'intérieur de l'enceinte.

Le moyen d'aspiration de fluide peut être une pompe, et le moyen permettant d'empêcher tout passage de fluide en sens inverse du sens d'aspiration de fluide peut être un dispositif anti-retour, comme par exemple un clapet anti-retour.

Les avantages ainsi que d'autres particularités de l'invention seront détaillés dans la description qui suit, donnée uniquement à titre d'exemple non limitatif, et faite en référence aux dessins annexés sur lesquels :
- la figure 1 illustre schématiquement un dispositif permettant de mettre en oeuvre le procédé selon l'invention, en configuration opérationnelle du dispositif, et
- la figure 2 illustre schématiquement le dispositif à l'issue du procédé.

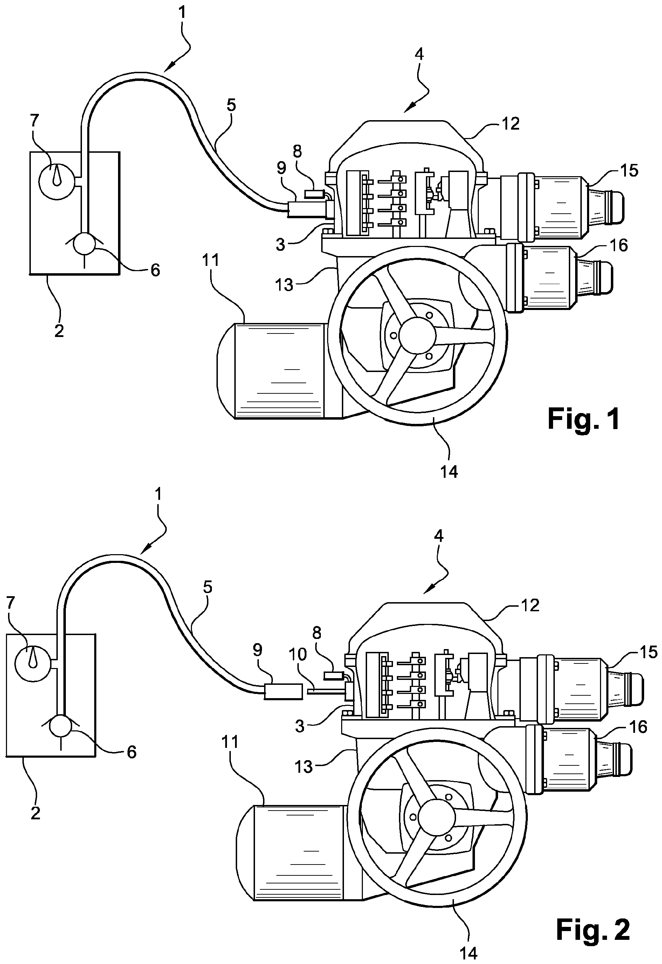

Le dispositif 1 selon l'invention, tel qu'illustré à la figure 1, comprend une pompe 2 alimentée par une batterie, non représentée. La pompe 2 est reliée à l'intérieur d'une enceinte 3 d'un servomoteur 4 à l'aide d'un conduit 5. Le dispositif 1 comprend en outre un clapet anti-retour 6 et un capteur de pression 7, disposés successivement le long du conduit 5, entre la pompe 2 et l'enceinte 3.

Pour mettre en oeuvre le procédé, on réalise une ouverture dans l'enceinte 3 du servomoteur 4, afin de raccorder la pompe 2 au servomoteur 4. L'ouverture peut être fermée par un bouchon 8, qui est par exemple vissé sur l'enceinte 3. Le bouchon 8 est choisi de manière à pouvoir maintenir l'étanchéité de l'enceinte 3 lorsque l'ouverture est fermée par le bouchon 8.

Pour raccorder la pompe 2 au servomoteur 4, on dévisse le bouchon 8 et un adaptateur vissé dans l'orifice du servomoteur 4 est connecté à un raccord rapide 9 disposé à l'extrémité du conduit 5.

Le servomoteur 4 comprend typiquement un ensemble moteur 11 apte à générer un mouvement d'un élément mécanique, un ensemble 12 de détection de position de l'élément mécanique, ainsi qu'un ensemble 13 comprenant l'élément mécanique et un système de commande manuelle. L'ensemble 13 comprend également un espace de communication entre l'enceinte 3, un connecteur 16 et l'ensemble moteur 11. L'espace de communication est isolé et étanche vis-à-vis de l'élément mécanique. L'élément mécanique de l'ensemble 13 est actionné par un volant 14 de commande manuelle disposé en dehors de l'enceinte 3.

L'ensemble 12 de détection de position peut être relié de façon amovible, par exemple par vissage, à un connecteur 15. Le connecteur 15 permet de connecter l'ensemble 12 de détection de position à un câble de transmission de données destiné au système de commande externe. De la même façon, l'ensemble 13 peut être relié de façon amovible, par exemple par vissage, à un connecteur 16. Le connecteur 16 permet de connecter un câble d'alimentation électrique à un circuit de connexion de l'ensemble 13, ledit circuit de connexion étant apte à être connecté à l'ensemble moteur 11. Le câble d'alimentation électrique permet de transmettre au servomoteur 4 la commande en provenance du système externe de commande.

Avant de tester l'étanchéité, on s'assure que les connecteurs 15,16 munis de leurs câbles respectifs sont installés. On peut ainsi tester l'étanchéité de l'ensemble moteur 11, de l'ensemble 12 de détection de position, et des connecteurs 15,16.

Une fois la pompe 2 raccordée à l'enceinte 3, le procédé d'évaluation de l'étanchéité peut être mis en oeuvre.

Dans une première étape, on diminue la pression à l'intérieur de l'enceinte 3, à l'aide de la pompe 2, en partant d'une pression initiale, et jusqu'à une pression de consigne.

La pression initiale régnant dans le servomoteur est de 1 bar (10⁵ Pa). On a constaté qu'une différence entre la pression initiale à l'intérieur du servomoteur 4 et la pression de consigne de l'ordre de 0,8 bar, comprise entre 0,7 et 0,9 bar, et de préférence entre 0,75 et 0,85 bar, permettait une évaluation efficace de l'étanchéité.

Lorsque la pression de consigne est atteinte, on stoppe la pompe 2. Grâce au clapet anti-retour 6, qui n'autorise un passage de fluide que dans un seul sens, depuis l'enceinte 3 vers la pompe 2, il n'y a pas de passage d'air dans l'enceinte 3 via le conduit 5.

Dans une deuxième étape, on observe l'évolution de la pression au cours du temps, à l'aide du capteur de pression 7. Avec une dépression de l'ordre de 0,8 bar, on a constaté que l'étanchéité pouvait être évaluée de façon efficace en observant la pression à l'issue d'un intervalle de temps commençant au stoppage de la pompe 2 et de durée comprise entre 10 et 20 minutes, et notamment d'environ 15 minutes.

Si, après 15 minutes, la différence entre la pression à l'intérieur du servomoteur 4 et la pression de consigne est inférieure à une valeur prédéterminée, ou mieux, si la différence est nulle, c'est-à-dire si aucune remontée de pression n'est visible, le servomoteur 4 est considéré comme étanche. A l'inverse, si la différence entre la pression à l'intérieur du servomoteur 4 et la pression de consigne est supérieure à une valeur prédéterminée, c'est-à-dire si on observe une remontée de pression à l'intérieure du servomoteur 4, le servomoteur 4 est considéré comme n'étant pas étanche.

Le procédé selon l'invention fait intervenir une diminution de la pression à l'intérieur de l'enceinte 3 du servomoteur 4, ce qui a pour avantage de faire travailler les joints d'étanchéité du servomoteur 4 dans leur sens d'utilisation, de l'extérieur vers l'intérieur du servomoteur 4. En outre, le procédé met en oeuvre de l'air, et non de l'eau, ce qui est plus contraignant.

Lorsque le procédé est terminé, le raccord rapide 9 est déconnecté de l'adaptateur 10, tel qu'illustré à la figure 2, sur laquelle les éléments identiques à ceux de la figure 1 portent les mêmes références. L'adaptateur 10 constitue une partie mâle reliée de manière amovible au raccord rapide 9. On dévisse ensuite l'adaptateur 10, puis le bouchon 8 est revissé.

Le procédé selon l'invention est ainsi particulièrement simple à mettre en oeuvre. Il fait intervenir un dispositif léger, transportable au pied du servomoteur et qui permet un contrôle local de l'étanchéité. Le procédé permet en outre de contrôler tout type de défaut d'étanchéité, par exemple une fissure. Un joint défectueux ou mal positionné sera immédiatement détecté.

Le procédé a pour but d'assurer à l'utilisateur qu'une fois tout installé et raccordé électriquement sur le site, il lui sera possible de vérifier l'étanchéité du servomoteur. Il pourra faire de même en cas d'intervention sur le site avant de remettre en service le servomoteur.

Le procédé permet de vérifier l'étanchéité de toute l'enceinte du servomoteur, y compris les pièces raccordées, tous les joints d'étanchéité, la partie moteur, la zone des capteurs et des connecteurs, en un seul test sur le site et sans alimentation externe.

Le procédé permet également de garantir l'étanchéité du servomoteur lors de sa mise en service ou après toute autre opération de maintenance. Le test d'étanchéité effectué sur un servomoteur devant fonctionner en cas d'accident nucléaire permet de garantir que l'équipement électrique interne fonctionnera dans des conditions optimales.

Un raccord, facile d'accès, permet de connecter l'outil de test alors que l'appareil est monté, raccordé électriquement et vérifié sur le site. L'outil de test est indépendant, il peut être équipé d'une batterie rechargeable permettant un test localement près du servomoteur sans alimentation électrique du secteur.

Enfin, les interventions sur le site nécessitant l'ouverture des capots du servomoteur par différentes équipes, le procédé permet de valider l'étanchéité après la fermeture des capots.

## Revendications

1. Procédé d'évaluation de l'étanchéité d'une enceinte (3) d'un servomoteur (4), le servomoteur (4) comprenant un ensemble moteur (11) apte à générer un mouvement d'un élément mécanique, un ensemble (12) de détection de position de l'élément mécanique relié de façon amovible à un connecteur (15), ainsi qu'un ensemble mécanique (13) relié de façon amovible à un connecteur (16) et comprenant l'élément mécanique et un système de commande manuelle, l'ensemble mécanique (13) comprenant également un espace de communication entre l'enceinte (3), le connecteur (16) et l'ensemble moteur (11), l'espace de communication étant isolé et étanche vis-à-vis de l'élément mécanique, le procédé étant mis en oeuvre en configuration opérationnelle du servomoteur (4), les connecteurs (15, 16) munis de leurs câbles respectifs étant installés, de manière à tester l'étanchéité de l'ensemble moteur (11), de l'ensemble (12) de détection de position et des connecteurs (15,16), **caractérisé en ce que** le procédé comprend les étapes suivantes :
- une étape de diminution de la pression à l'intérieur de ladite enceinte (3), à partir d'une pression initiale, et jusqu'à une pression de consigne, par la mise en oeuvre d'un moyen (2) d'aspiration de fluide raccordé au servomoteur (4) à l'aide d'une ouverture de l'enceinte (3), l'ouverture étant apte à être fermée par un bouchon (8),
- lorsque la pression à l'intérieur de ladite enceinte (3) est égale à la pression de consigne, une étape de détermination de l'évolution de la pression à l'intérieur de ladite enceinte (3) en fonction du temps, pendant un intervalle de temps prédéterminé, le moyen (2) d'aspiration de fluide n'étant plus mis en oeuvre pendant cette étape, ledit moyen (2) d'aspiration de fluide étant en outre relié à ladite enceinte (3) de manière à empêcher, entre le moyen (2) d'aspiration de fluide et l'enceinte (3), tout passage de fluide en sens inverse du sens d'aspiration de fluide, et
- une étape d'évaluation de l'étanchéité de l'enceinte (3) du servomoteur (4) en fonction de l'évolution de pression déterminée.

2. Procédé selon la revendication 1, **caractérisé en ce que** l'enceinte (3) du servomoteur (4) est considérée comme étanche si, pendant l'évolution de pression déterminée, la différence entre la pression à l'intérieur de l'enceinte (3) du servomoteur (4) et la pression de consigne est inférieure à une valeur prédéterminée.

3. Procédé selon l'une des revendications 1 ou 2, **caractérisé en ce que** la pression initiale à l'intérieur de l'enceinte (3) du servomoteur (4) est de 1 bar.

4. Procédé selon la revendication 3, **caractérisé en ce que** la différence entre la pression initiale à l'intérieur de l'enceinte (3) du servomoteur (4) et la pression de consigne est comprise entre 0,7 et 0,9 bar.

5. Procédé selon la revendication 3 ou 4, **caractérisé en ce que** la différence entre la pression initiale à l'intérieur de l'enceinte (3) du servomoteur (4) et la pression de consigne est comprise entre 0,75 et 0,85 bar.

6. Procédé selon la revendication 4 ou 5, **caractérisé en ce que** la durée de l'intervalle de temps prédéterminé de l'étape de détermination de l'évolution de pression est comprise entre 10 et 20 minutes.

7. Procédé selon l'une des revendications 1 à 6, **caractérisé en ce qu'**il est mis en oeuvre dans une centrale nucléaire.

8. Ensemble comprenant un dispositif (1) d'évaluation de l'étanchéité d'une enceinte (3) et un servomoteur (4), **caractérisé en ce qu'**il comprend :
- un servomoteur (4) comprenant un ensemble moteur (11) apte à générer un mouvement d'un élément mécanique, un ensemble (12) de détection de position de l'élément mécanique relié de façon amovible à un connecteur (15), ainsi qu'un ensemble mécanique (13) relié de façon amovible à un connecteur (16) et comprenant l'élément mécanique et un système de commande manuelle, l'ensemble mécanique (13) comprenant également un espace de communication entre l'enceinte (3) du servomoteur, le connecteur (16) et l'ensemble moteur (11), l'espace de communication étant isolé et étanche vis-à-vis de l'élément mécanique, les connecteurs (15,16) munis de leurs câbles respectifs étant installés, de manière à tester l'étanchéité de l'ensemble moteur (11), de l'ensemble (12) de détection de position et des connecteurs (15, 16), en configuration opérationnelle du servomoteur,
- un moyen (2) d'aspiration de fluide destiné à être raccordé, lors d'une évaluation de l'étanchéité de l'enceinte (3) du servomoteur, au servomoteur (4) à l'aide d'une ouverture de l'enceinte (3), l'ouverture étant apte à être fermée par un bouchon (8),
- un moyen (6) permettant d'empêcher, entre le moyen (2) d'aspiration de fluide et l'enceinte (3) lors d'une utilisation, tout passage de fluide en sens inverse du sens d'aspiration de fluide, et
- un moyen (7) de mesure de la pression à l'intérieur de l'enceinte (3) lors de l'évaluation.

9. Ensemble selon la revendication 8, **caractérisé en ce que** le moyen (2) d'aspiration de fluide est une pompe (2), et **en ce que** le moyen (6) permettant d'empêcher tout passage de fluide en sens inverse du sens d'aspiration de fluide est un dispositif antiretour (6).

## Patentansprüche

1. Verfahren zur Überprüfung der Dichtigkeit eines Gehäuses (3) eines Servomotors (4), wobei der Servomotor (4) eine Motoreinheit (11), die imstande ist, eine Bewegung eines mechanischen Elements zu erzeugen, eine Einheit (12) zur Positionsdetektion des mechanischen Elements, die mit einem Verbinder (15) lösbar verbunden ist, sowie eine mechanische Einheit (13) besitzt, die mit einem Verbinder (16) lösbar verbunden ist und das mechanische Element und ein manuelles Steuersystem umfasst, wobei die mechanische Einheit (13) ebenfalls einen Kommunikationsraum zwischen dem Gehäuse (3), dem Verbinder (16) und der Motoreinheit (11) umfasst, wobei der Kommunikationsraum isoliert und dicht gegenüber dem mechanischen Element ist, wobei das Verfahren in operativer Konfiguration des Servomotors (4) durchgeführt wird, wobei die mit ihren jeweiligen Kabeln versehenen Verbinder (15, 16) derart installiert sind, dass die Dichtigkeit der Motoreinheit (11), der Positionsdetektionseinheit (12) und der Verbinder (15, 16) getestet wird, **dadurch gekennzeichnet, dass** das Verfahren die folgenden Schritte umfasst:
- einen Schritt der Senkung des Drucks im Inneren des Gehäuses (3) von einem Ausgangsdruck auf einen Solldruck durch Anwenden eines über eine Öffnung des Gehäuses (3) mit dem Servomotor (4) verbundenen Fluidansaugmittels (2), wobei die Öffnung durch einen Stopfen (8) verschließbar ist,
- wenn der Druck im Inneren des Gehäuses (3) gleich dem Solldruck ist, einen Schritt des Bestimmens der Entwicklung des Drucks im Inneren des Gehäuses (3) in Abhängigkeit von der Zeit während eines vorher festgelegten Zeitintervalls, wobei das Fluidansaugmittel (2) während dieses Schritts nicht mehr angewendet wird, wobei das Fluidansaugmittel (2) ferner mit dem Gehäuse (3) derart verbunden ist, dass zwischen dem Fluidansaugmittel (2) und dem Gehäuse (3) jedweder Fluiddurchgang in zur Fluidansaugrichtung entgegengesetzter Richtung verhindert wird, und
- einen Schritt zur Abschätzung der Dichtigkeit des Gehäuses (3) des Servomotors (4) in Abhängigkeit von der festgestellten Druckentwicklung.

2. Verfahren nach Anspruch 1, **dadurch gekennzeichnet, dass** das Gehäuse (3) des Servomotors (4) als dicht betrachtet wird, wenn während der festgestellten Druckentwicklung die Differenz zwischen dem Druck im Inneren des Gehäuses (3) des Servomotors (4) und dem Solldruck unter einem vorher festgelegten Wert liegt.

3. Verfahren nach einem der Ansprüche 1 oder 2, **dadurch gekennzeichnet, dass** der Ausgangsdruck im Inneren des Gehäuses (3) des Servomotors (4) 1 bar beträgt.

4. Verfahren nach Anspruch 3, **dadurch gekennzeichnet, dass** die Differenz zwischen dem Ausgangsdruck im Inneren des Gehäuses (3) des Servomotors (4) und dem Solldruck zwischen 0,7 und 0,9 bar liegt.

5. Verfahren nach Anspruch 3 oder 4, **dadurch gekennzeichnet, dass** die Differenz zwischen dem Ausgangsdruck im Inneren des Gehäuses (3) des Servomotors (4) und dem Solldruck zwischen 0,75 und 0,85 bar liegt.

6. Verfahren nach Anspruch 4 oder 5, **dadurch gekennzeichnet, dass** die Dauer des vorher festgelegten Zeitintervalls des Schritts des Bestimmens der Druckentwicklung zwischen 10 und 20 Minuten beträgt.

7. Verfahren nach einem der Ansprüche 1 bis 6, **dadurch gekennzeichnet, dass** es in einem Kernkraftwerk durchgeführt wird.

8. Einheit, umfassend eine Vorrichtung (1) zur Überprüfung der Dichtigkeit eines Gehäuses (3) und einen Servomotor (4), **dadurch gekennzeichnet, dass** sie umfasst:
- einen Servomotor (4), umfassend eine Motoreinheit (11), die imstande ist, eine Bewegung eines mechanischen Elements zu erzeugen, eine Einheit (12) zur Positionsdetektion des mechanischen Elements, die mit einem Verbinder (15) lösbar verbunden ist, sowie eine mechanische Einheit (13), die mit einem Verbinder (16) lösbar verbunden ist und das mechanische Element und ein manuelles Steuersystem umfasst, wobei die mechanische Einheit (13) ebenfalls einen Kommunikationsraum zwischen dem Gehäuse (3), dem Verbinder (16) und der Motoreinheit (11) umfasst, wobei der Kommunikationsraum isoliert und gegenüber dem mechanischen Element dicht ist, wobei die mit ihren jeweiligen Kabeln versehenen Verbinder (15, 16) derart installiert sind, dass in operativer Konfiguration des Servomotors die Dichtigkeit der Motoreinheit (11), der Positionsdetektionseinheit (12) und der Verbinder (15, 16) getestet wird,
- ein Fluidansaugmittel (2), das bestimmt ist, bei einer Überprüfung der Dichtigkeit des Gehäuses (3) des Servomotors über eine Öffnung des Gehäuses (3) mit dem Servomotor (4) verbunden zu sein, wobei die Öffnung durch einen Stopfen (8) verschließbar ist,
- ein Mittel (6), das es erlaubt, jedweden Fluiddurchgang in zur Fluidansaugrichtung entgegengesetzter Richtung zwischen dem Fluidansaugmittel (2) und dem Gehäuse (3) bei einer Benutzung zu verhindern, und
- ein Messmittel (7) des Drucks im Inneren des Gehäuses (3) bei der Überprüfung.

9. Vorrichtung (1) nach Anspruch 8, **dadurch gekennzeichnet, dass** das Fluidansaugmittel (2) eine Pumpe (2) ist und dass das Mittel (6), das erlaubt, jedweden Fluiddurchgang in zur Fluidansaugrichtung entgegengesetzter Richtung zu verhindern, eine Rücklaufsperrvorrichtung (6) ist.

## Claims

1. A method for assessing the tightness of a servomotor (4) housing (3), the servomotor (4) comprising a motor assembly (11) capable of generating a movement of a mechanical element, an assembly (12) for detecting a position of the mechanical element connected removably to a connector (15), as well as a mechanical assembly (13) connected removably to a connector (16) and comprising the mechanical element and a manual control system, the mechanical assembly (13) also comprising a communication space between the housing (3), the connector (16) and the motor assembly (11), the communication space being isolated and hermetic with respect to the mechanical element, the method being implemented in the operational configuration of the servomotor (4), the connectors (15, 16) provided with their respective cables being installed, so as to test the tightness of the motor assembly (11), the position detection assembly (12) and the connectors (15, 16), **characterized in that** the method comprises the following steps:
- a step of decreasing the pressure inside said housing (3), from an initial pressure, and to a setpoint pressure, by implementing a fluid suction means (2) connected to the servomotor (4) using an opening of the housing (3), the opening being able to be closed by a stopper (8),
- when the pressure inside said housing (3) is equal to the setpoint pressure, a step of determining the evolution of the pressure inside said housing (3) as a function of time, during a predetermined time interval, the fluid suction means (2) no longer being put into action during this step, said fluid suction means (2) further being connected to said housing (3) so as to prevent, between the fluid suction means (2) and the housing (3), any passage of fluid in the direction opposite the fluid suction direction, and
- a step of assessing the tightness of the housing (3) of the servomotor (4) as a function of the determined pressure evolution.

2. The method according to claim 1, **characterized in that** the housing (3) of the servomotor (4) is considered tight if, during the determined pressure evolution, the difference between the pressure inside the housing (3) of the servomotor (4) and the setpoint pressure is below a predetermined value.

3. The method according to one of claims 1 or 2, **characterized in that** the initial pressure inside the housing (3) of the servomotor (4) is 1 bar.

4. The method according to claim 3, **characterized in that** the difference between the initial pressure inside the housing (3) of the servomotor (4) and the setpoint pressure is between 0.7 and 0.9 bar.

5. The method according to claim 3 or 4, **characterized in that** the difference between the initial pressure inside the housing (3) of the servomotor (4) and the setpoint pressure is between 0.75 and 0.85 bar.

6. The method according to claim 4 or 5, **characterized in that** the duration of the predetermined time interval of the step for determining the pressure evolution is between 10 and 20 minutes.

7. The method according to one of claims 1 to 6, **characterized in that** it is implemented in a nuclear power plant.

8. An assembly comprising a device (1) for assessing the seal of a housing (3) and a servomotor (4), **characterized in that** it comprises:
- a servomotor (4) comprising a motor assembly (11) capable of generating a movement of a mechanical element, an assembly (12) for detecting a position of the mechanical element connected removably to a connector (15), as well as a mechanical assembly (13) removably connected to a connector (16) and comprising the mechanical element and a manual control system, the mechanical assembly (13) also comprising a communication space between the housing (3) of the servomotor, the connector (16) and the motor assembly (11), the communication space being isolated and hermetic with respect to the mechanical element, the connectors (15, 16) provided with their respective cables being installed, so as to test the tightness of the motor assembly (11), the position detection assembly (12) and the connectors (15, 16), in the operational configuration of the servomotor,
- a fluid suction means (2) intended to be connected, during an assessment of the tightness of the housing (3) of the servomotor, to the servomotor (4) using an opening of the housing (3), the opening being able to be closed by a stopper (8),
- a means (6) making it possible to prevent, between the fluid suction means (2) and the housing (3) during a use, any passage of fluid in the direction opposite the fluid suction direction, and
- a means (7) for measuring the pressure inside the housing (3) during the assessment.

9. The assembly according to claim 8, **characterized in that** the fluid suction means (2) is a pump (2), and **in that** the means (6) making it possible to prevent any passage of fluid in the direction opposite the fluid suction direction is a ant-backflow device (6).
